# EUROPEAN PATENT SPECIFICATION

(11) **EP 2 540 577 B1**
(45) Date of publication and mention of the grant of the patent: **02.07.2014**
(21) Application number: 10846518.8
(22) Date of filing: 26.02.2010
(51) Int. Cl.: B60R 19/52, B60R 19/02

(54) **VEHICLE FRONT SECTION STRUCTURE**
FAHRZEUGFRONTABSCHNITTSSTRUKTUR
STRUCTURE DE SECTION AVANT DE VÉHICULE

(43) Date of publication of application: 02.01.2013
(73) Proprietor: TOYOTA JIDOSHA KABUSHIKI KAISHA, Toyota-shi, Aichi-ken, 471-8571 (JP)
(72) Inventor: OTSUKA, Ryuji, Toyota-shi, Aichi 471-8571 (JP)
(74) Representative: Winter, Brandl, Fürniss, Hübner, Röss, Kaiser, Polte - Partnerschaft
(86) International application number: PCT/JP2010/053048
(87) International publication number: WO 2011/104853

(56) References cited:
- DE-A1- 4 435 396
- DE-A1- 10 350 294
- JP-A- 10 006 887
- JP-A- 56 034 541
- JP-A- 58 030 874
- JP-A- 2004 203 183
- JP-A- 2007 001 546
- JP-A- 2007 015 659
- JP-A- 2009 220 663
- JP-A- 2009 286 241
- JP-A- 2010 000 881
- JP-A- 2010 006 238

## Description

### Technical Field

The present invention relates to a vehicle front section structure in which a bumper cover is supported from a vehicle rear side by a radiator grille.

### Background Art

In a vehicle front section structure disclosed in Japanese Patent Application Laid-Open (JP-A) No. 2006-076429, a radiator support is provided at a position disposed away from the displacement trajectory of an engine hood during an impact by an impacting body from diagonally above and front side of the vehicle. A large load is thereby prevented from acting on an impacting body. DE 103 50 294 A1 discloses the basis for the preamble of claim 1.

### DISCLOSURE OF INVENTION

### Technical Problem

In order to prevent damage to a hood during minor collisions, there has recently been an increase in vehicles configured such that a front edge of the hood is disposed to be retreated towards the vehicle rear side and a bumper cover upper portion side extends towards the vehicle rear side such that a top edge of the bumper cover faces the front edge of the hood. In such vehicles, there is a need to reduce the maximum load that acts on an impacting body, when the impacting body collides with the bumper cover from the vehicle front side, with some impact absorption by a configuration formed peripheral to the bumper cover.

In consideration of the above circumstances, a subject of the present invention is to obtain a vehicle front section structure that can reduce the maximum load acting on an impacting body when the impacting body collides with a bumper cover from the vehicle front side. Solution to Subject

A vehicle front section structure according to a first aspect of the present invention includes the features disclosed in claim 1. Advantageous embodiments are subject of the subclaims.

In the vehicle front section structure of the first aspect, the bumper cover is supported from the vehicle rear side by the grille main body portion of the radiator grille. Load is therefore input from the vehicle front side to the grille main body portion when an impacting body collides with the bumper cover from the vehicle front side. The planned bending portion, provided between the fixed portion fixed to the vehicle body side and the grille main body portion of the radiator grille, is accordingly bent, and the grille main body portion rotates towards the retreat position on the vehicle rear side. The contact portion provided to the radiator grille makes contact with the vehicle body side member during the rotation of the grille main body portion. The load acting on the impacting body accordingly increases, however the contact release section releases the contact state of the contact portion with the vehicle body side member when load of a set value or greater due to such contact is input to the contact release section. Rotation of the grille main body portion towards the retreat position is thereby permitted, and the load input from the bumper cover to the impacting body is reduced. The maximum load acting on the impacting body can thereby be reduced.

A vehicle front section structure according to a second aspect of the present invention is the vehicle front section structure of the first aspect, wherein the contact release section is a contact side weakened portion provided at the radiator grille, and the contact side weakened portion deforms or ruptures when the input load is the set value or greater.

In the vehicle front section structure of the second aspect, the contact side weakened portion provided at the radiator grille deforms or ruptures when the input load is the set value or greater due to the contact portion provided to the radiator grille making contact with the vehicle body side member. Accordingly, the state of contact between the contact portion and the vehicle body side member is released with a simple configuration which is employed for the contact release section.

A vehicle front section structure according to a third aspect of the present invention is the vehicle front section structure of the first or second aspects, wherein the planned bending portion is formed with a curved line profile as viewed from the vehicle top-bottom direction such that a vehicle width direction central part of the planned bending portion is positioned further towards the vehicle front side than vehicle width direction end sides of the planned bending portion.

In the vehicle front section structure of the third aspect, when load is input from the vehicle front side to the grille main body portion of the radiator grille, the radiator grille is bent at the planned bending portion formed with a curved line profile as viewed from the vehicle top-bottom direction such that the vehicle width direction central part of the planned bending portion is positioned further towards the vehicle front side than the vehicle width direction end sides of the planned bending portion. The planned bending portion is formed with the curved line profile as viewed from the vehicle top-bottom direction such that the vehicle width direction central part of the planned bending portion positioned further towards the vehicle front side than the vehicle width direction end sides of the planned bending portion. The radiator grille can be hence bent in a desirable fashion at the planned bending portion even when the front face side of the radiator grille is formed in a curve so as to bulge out towards the vehicle front side at the vehicle width direction central part of the radiator grille.

A vehicle front section structure of a fourth aspect of the present invention is the vehicle front section structure of either the first or the second aspect wherein the radiator grille is formed with a curvature on the front face side, as viewed from the vehicle top-bottom direction, and the radiator grille is provided with the planned bending portion formed as a single straight line provided along the vehicle width direction, or the radiator grille is provided with plural planned bending portions formed as straight lines disposed in a row along the vehicle width direction so as to follow the curvature of the front face side of the radiator grille.

In the vehicle front section structure of the fourth aspect, when load is input from the vehicle front side to the grille main body portion of the radiator grille, the radiator grille is bent at the planned bending portion that is a single straight line provided at the radiator grille along the vehicle width direction, or is bent at the plural planned bending portions that are straight lines provided in a row along the vehicle width direction so as to follow the curvature of the front-face side of the radiator grille. Any adverse effect due to the front face side of the radiator grille being curved can be reduced by thus forming the planned bending portion(s) as straight lines, and the radiator grille can be bent at the planned bending portion(s) in a desirable fashion.

A vehicle front section structure of a fifth aspect of the present invention is the vehicle front section structure of any one of the first to the fourth aspects wherein the vehicle body side member is disposed at a position so as to make contact with the contact portion at an initial period of the rotation of the grille main body portion.

In the vehicle front section structure of the fifth aspect, when the grille main body portion of the radiator grille rotates towards the retreat position, the contact portion provided to the radiator grille makes contact with the vehicle body side member during the initial period of rotation of the grille main body portion. The load acting on the impacting body at the initial period can accordingly be caused to rise rapidly.

A vehicle front section structure of a sixth aspect of the present invention is the vehicle front section structure of any one of the first to the fifth aspects wherein the vehicle body side member is a bumper reinforcement, and the contact portion is provided at a bottom edge portion of the radiator grille.

In the vehicle front section structure of the sixth aspect, when the grille main body portion of the radiator grille rotates towards the retreat position, the contact portion provided at the bottom edge portion of the radiator grille makes contact with the bumper reinforcement. Since the contact portion makes contact with the bumper reinforcement which is normally disposed at a bottom side of the radiator grille, the contact portion can contact with the bumper reinforcement immediately after rotation of the grille main body portion has started. The load acting on the impacting body in the initial period can accordingly be made to rise rapidly.

A vehicle front section structure according to a seventh aspect of the present invention is the vehicle front section structure of any one of the first to the sixth aspects wherein the planned bending portion is a weakened portion for rotation configured by weakening the radiator grille between the grille main body portion and the fixed portion.

In the vehicle front section structure of the seventh aspect, when load is input from the vehicle front side to the grille main body portion of the radiator grille, the grille main body portion rotates towards the retreat position due to bending of the weakened portion for rotation, provided between the fixed portion fixed to the vehicle body side and the grille main body portion. The planned bending portion can be achieved with a simple configuration by thus providing the weakened portion for rotation to the radiator grille so that the radiator grille can be bent.

A vehicle front section structure of an eighth aspect of the present invention is the vehicle front section structure of the seventh aspect wherein the attachment member is formed with a higher rigidity than the radiator grille, and the weakened portion for rotation is disposed facing an end portion of the attachment member.

In the vehicle front section structure of the eighth aspect, the weakened portion for rotation of the radiator grille is disposed facing the end portion of the attachment member that has a higher rigidity than the radiator grille. Stress arising when load is input to the grille main body portion of the radiator grille can accordingly be concentrated at the weakened portion for rotation. The radiator grille can accordingly be bent in a desirable fashion at the weakened portion for rotation.
A vehicle front section structure of a ninth aspect of the present invention is the vehicle front section structure of any one of the first to the eighth aspect, wherein the vehicle body side member faces the contact portion and is separated from the contact portion by a gap. Advantageous Effects of Invention

As described above, when the impacting body collides with the bumper cover from the vehicle front side, the maximum load acting on the impacting body can be reduced in the vehicle front section structure according to the first aspect of the invention.

The contact release section can be achieved with a simple configuration in the vehicle front section structure according to the second aspect of the invention.

In the vehicle front section structure according to the third aspect of the invention, the radiator grille can be bent around the planned bending portion in a desirable fashion even in cases where the front face side of the radiator grille is formed in a curve such that the vehicle width direction central part thereof bulges towards the vehicle front side.

In the vehicle front section structure according to the fourth aspect of the invention, any adverse effects arising from the curved front face side of the radiator grille can be reduced, and the radiator grille can be bent around the planned bending portion in a desirable fashion.

The initial load acting on the impacting body can be caused to rise rapidly in the vehicle front section structure according to the fifth aspect of the invention.

In the vehicle front section structure according to the sixth aspect of the invention, the contact portion can be made to contact the bumper reinforcement immediately after the grille main body begins to rotate, and therefore the load acting on the impacting body in the initial period can be caused to rise rapidly.

A simple configuration can be achieved for the planned bending portion in the vehicle front section structure according to the seventh aspect of the invention.

The radiator grille can be bent around the weakened portion for rotation in a desirable fashion in the vehicle front section structure according to the eighth aspect of the invention.

### BRIEF DESCRIPTION OF DRAWINGS

Fig. 1 is a schematic perspective view illustrating a vehicle front section to which a vehicle front section structure according to a first exemplary embodiment of the present invention has been applied;

### Advantageous Effects of Invention

Fig. 2 is a vertical cross-section taken along line 2-2 of Fig. 1;
Fig. 3 is a schematic perspective view illustrating a configuration of a radiator grille and an upper radiator support shown in Fig. 2;
Fig. 4 is an enlarged cross-section of a portion of Fig. 2;
Fig. 5A is a vertical cross-section showing a section taken along line 5-5 of Fig. 3;
Fig. 5B is a vertical cross-section corresponding to Fig. 5A, illustrating a state where a contact side weakened portion has bent and a contact portion has folded up;
Fig. 6 is a graph illustrating a relationship between a load imparted to an impacting body and a movement stroke when the impacting body has collides with a bumper cover according to the first exemplary embodiment diagonally from a top side and front side of the vehicle;
Fig. 7 is a schematic perspective view illustrating a configuration of a radiator grille that is a configuration member of a vehicle front section structure according to a second exemplary embodiment of the present invention;
Fig. 8 is a schematic perspective view illustrating a configuration of a radiator grille that is a configuration member of a vehicle front section structure according to a third exemplary embodiment of the present invention;
Fig. 9A is a vertical cross-section showing a section taken along line 9-9 of Fig. 8; and
Fig. 9B is a vertical cross-section corresponding to Fig. 9A illustrating a state where a contact side weakened portion has ruptured and a contact portion has fallen away.

### BEST MODE FOR CARRYING OUT THE INVENTION

### First Exemplary Embodiment

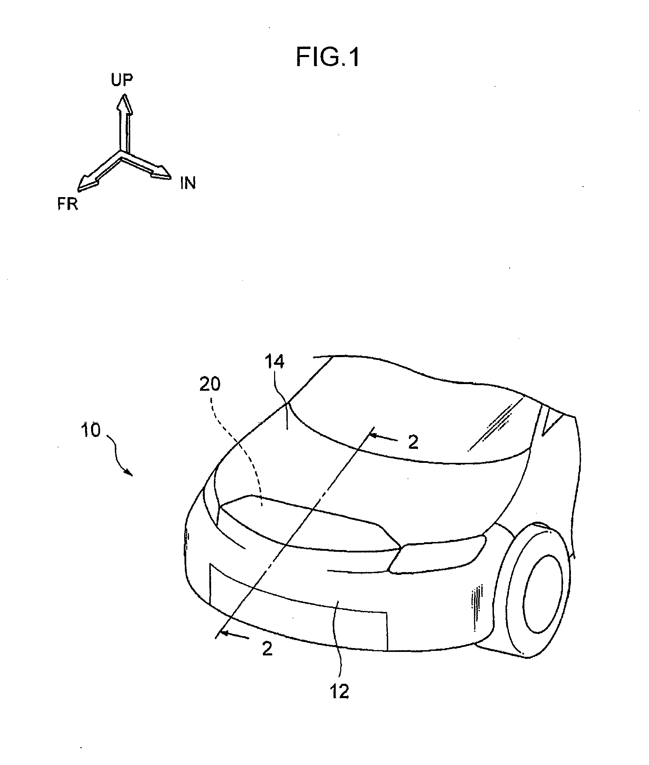

Explanation follows regarding a vehicle front section structure 10 according to a first exemplary embodiment of the present invention, with reference to Fig. 1 to Fig. 6. In the drawings, arrow FR indicates a vehicle front direction, arrow UP indicates a vehicle top direction, and arrow IN indicates a vehicle width inside direction.

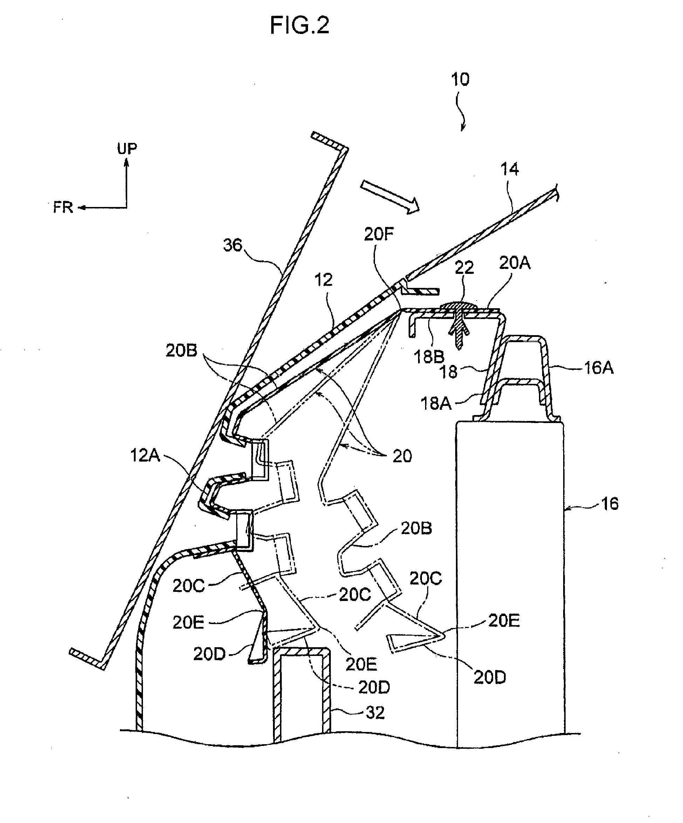

As shown in Fig. 1, a vehicle front section structure 10 according to the first exemplary embodiment is provided with a bumper cover 12 extending along a vehicle width direction at a front portion of the vehicle. The bumper cover 12 is formed from a resin material with a thin walled profile, and configures a design face of the vehicle front section. As shown in Fig. 2, an upper side of the bumper cover 12 extends upwards and inclines towards the vehicle rear side, and an upper end portion of the bumper cover 12 is disposed facing a front end portion of a hood 14 that covers an engine room at a vehicle body front section. The design face of the bumper cover 12 and the design face of the hood 14 are therefore configured such that one continues from the other. Since the upper side of the bumper cover 12 is extended towards the vehicle rear side, the front end portion of the hood 14 is disposed to be relatively retreated towards the vehicle rear side (note that Fig. 2 shows a schematic cross-section of the hood 14).

A radiator support 16 that is a framework member configuring the vehicle body is disposed at a lower side of the front end portion of the hood 14. A radiator, not shown in the drawings, is attached to the radiator support 16. The upper end portion of the bumper cover 12 is fixed through a bracket, not shown in the drawings, to an upper radiator support 16A that configures an upper portion of the radiator support 16. Note that both vehicle width direction end sides and a bottom end side of the bumper cover 12 are fixed to a vehicle body through brackets or the like, not shown in the drawings.

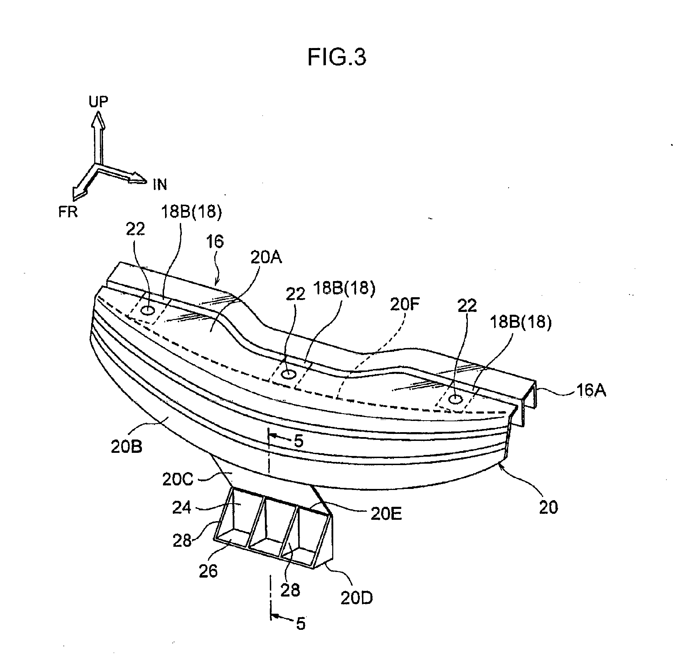

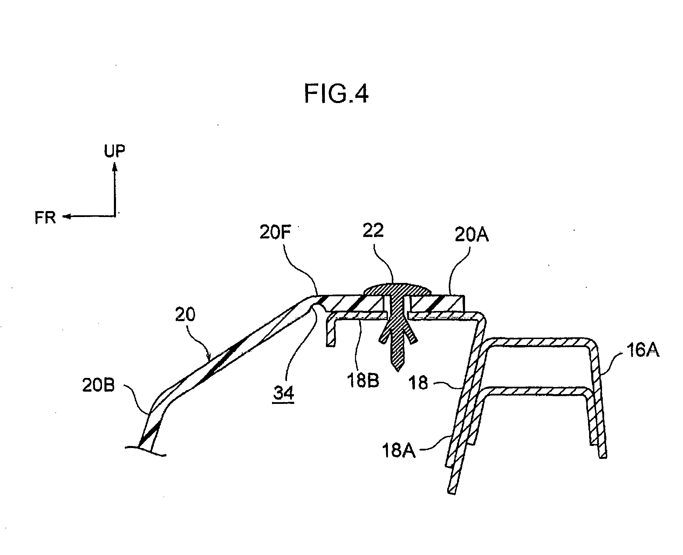

As shown in Fig. 3, plural (three in the present example) radiator support brackets 18 serving as attachment members are disposed at a front face side of the upper radiator support 16A along the vehicle width direction. The radiator support brackets 18 are formed by bending a sheet metal material into a substantially L-shaped profile (see Fig. 4), and each include a joining portion 18A that is welded to the front face of the upper radiator support 16A, and a grille attachment portion 18B extending integrally from a top end of the joining portion 18A towards the vehicle front side. A radiator grille 20 is attached to the radiator support brackets 18.

The radiator grille 20 is formed from a resin material having higher rigidity than the bumper cover 12, and lower rigidity than the radiator support brackets 18, and is disposed at the vehicle rear side of the bumper cover 12. The radiator grille 20 is provided with a plate shaped fixed portion 20A that is supported from below by the grille attachment portions 18B of the radiator support bracket 18. The fixed portion 20A is fixed to the radiator support bracket 18 by clips 22 that pass through the fixed portion 20A and the grille attachment portions 18B. In another configuration of the first exemplary embodiment, for example screws or bolts may be used in place of the clips 22.

A grille main body portion 20B extends integrally from a front end of the fixed portion 20A, inclined downwards towards the vehicle front side. A lower portion side of the grille main body portion 20B is formed with a lattice pattern corresponding to a lattice portion 12A formed at the bumper cover 12, and fits into the lattice portion 12A of the bumper cover 12 from the vehicle rear side. The bumper cover 12 is consequently supported from the vehicle rear side by the radiator grille 20.

A plate shaped lower side extension portion 20C extends from a bottom edge of the grille main body portion 20B, inclined downwards towards the vehicle rear side. A contact portion 20D is provided at a lower side of the lower side extension portion 20C. The contact portion 20D is provided with a plate shaped vertical wall 24 extending integrally from a bottom edge of the lower side extension portion 20C towards the vehicle lower side. A plate shaped horizontal wall 26 extends integrally from a bottom edge of the vertical wall 24 towards the vehicle front side. Plural plate shaped ribs 28 integrally connect the front face of the vertical wall 24 and the top face of the horizontal wall 26. The ribs 28 are disposed in a row along the vehicle width direction with a plate thickness direction aligned with the vehicle width direction. The vertical wall 24 and the horizontal wall 26 are accordingly reinforced by the ribs 28.

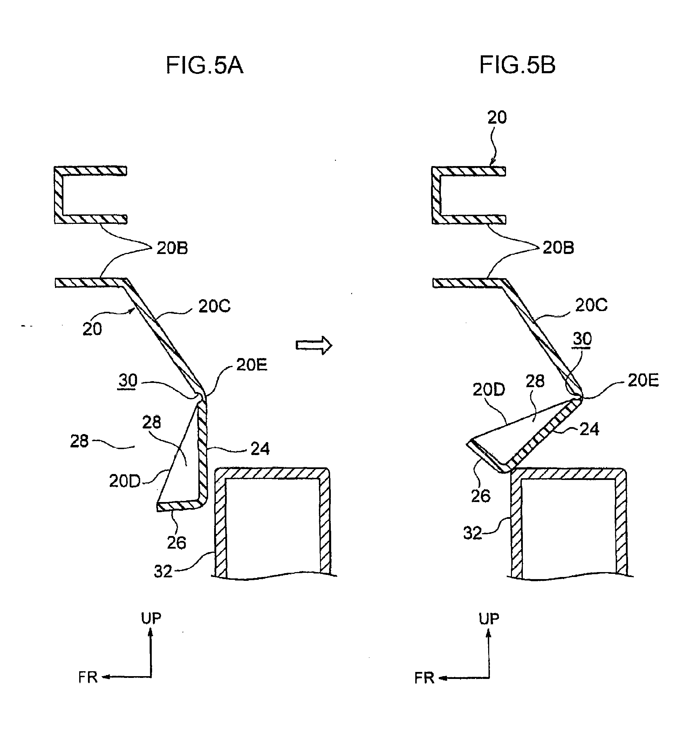

As shown in Fig. 5A, a contact side weakened portion 20E is provided between the vertical wall 24 of the contact portion 20D and the lower side extension portion 20C. The contact side weakened portion 20E is formed with a groove 30 extending in the vehicle width direction on a front face of the radiator grille 20 between the vertical wall 24 and the lower side extension portion 20C. The contact side weakened portion 20E is formed by thinning the wall such that the radiator grille 20 is weakened at a location of the contact side weakened portion 20E.

A bumper reinforcement 32 is disposed to the vehicle rear side of the contact portion 20D described above, as a framework member provided at a vehicle body front section. A top end portion of the bumper reinforcement 32 is disposed facing the contact portion 20D and separated therefrom by a small gap at the vehicle rear side of the contact portion 20D. Note that the gap is set with dimensions such that the contact portion 20D and the bumper reinforcement 32 do not unintentionally interfere with one another during normal vehicle use.

In the first exemplary embodiment, the radiator grille 20 described above is formed to be curved as viewed from the vehicle top-bottom direction, such that a vehicle width direction central part bulges out further towards the vehicle front side than vehicle width direction end sides. A weakened portion for rotation 20F (planned bending portion, see Fig. 3) is also provided between the fixed portion 20A and the grille main body portion 20B (note that for ease of explanation, the weakened portion for rotation 20F is shown by a bold dotted line in Fig. 3). The weakened portion for rotation 20F is formed by a groove 34 (see Fig. 4) on a back face of the radiator grille 20 between the fixed portion 20A and the grille main body portion 20B, and is formed by thinning the wall such that the radiator grille 20 is weakened at the weakened portion for rotation 20F. The weakened portion for rotation 20F is formed with a curved line shape when viewed from the vehicle top-bottom direction, curving such that a vehicle width direction central part is positioned further towards the vehicle front side than vehicle width direction end sides. The weakened portion for rotation 20F is disposed facing front ends of each of the radiator support brackets 18. In other words, when viewed from the vehicle top-bottom direction, the weakened portion for rotation 20F is disposed so as to locate at a front end portion of each of the radiator support brackets 18. Note that configuration may be made in another exemplary embodiment such that a weakened portion for rotation (planned bending portion) is provided to the radiator grille 20 by forming, for example, slits or holes between the fixed portion 20A and the grille main body portion 20B.

In the first exemplary embodiment, the weakened portion for rotation 20F is thus provided to the radiator grille 20. The grille main body portion 20B accordingly is moved to rotate along with the lower side extension portion 20C and the contact portion 20D, towards a retreat position (the position shown by the single-dashed intermittent lines in Fig. 2) at the vehicle rear side, by the weakened portion for rotation 20F bending when load is input to the grille main body portion 20B of the radiator grille 20 from the vehicle front side. Namely, when load is input to the grille main body portion 20B from the vehicle front side in the first exemplary embodiment, the grille main body portion 20B, the lower side extension portion 20C and the contact portion 20D rotate towards the vehicle rear side relative to the fixed portion 20A that is attached to the radiator support 16, or in other words, relative to the vehicle body side.

However, the top end portion of the bumper reinforcement 32 is disposed facing the rear side of the contact portion 20D as described above. Therefore, when the contact portion 20D rotates towards the vehicle rear side as described above, the contact portion 20D comes into contact with the top end portion of the bumper reinforcement 32. Note that the contact portion 20D comes into contact with the bumper reinforcement 32 at the stage immediately after starting to rotate together with the grille main body portion 20B towards the retreat position.

Explanation follows of the operation and advantageous effects of the first exemplary embodiment.

In the vehicle front section structure 10 configured as above, the bumper cover 12 is supported by the grille main body portion 20B of the radiator grille 20 from the vehicle rear side. Accordingly, when, for example, an impacting body 36 collides with the bumper cover 12 from diagonally above the vehicle front side, load is input to the grille main body portion 20B from the vehicle front side towards the vehicle rear side. The weakened portion for rotation 20F provided between the fixed portion 20A and the grille main body portion 20B of the radiator grille 20 accordingly bends, and the grille main body portion 20B is moved to rotate together with the lower side extension portion 20C and the contact portion 20D towards the retreat position on the vehicle rear side.

In the first exemplary embodiment, since the top end portion of the bumper reinforcement 32 is disposed facing the vehicle rear side of the contact portion 20D, when the contact portion 20D rotates towards the vehicle rear side together with the grille main body portion 20B etc. as described above, the contact portion 20D comes into contact with the top end portion of the bumper reinforcement 32. The rotation of the grille main body portion 20B towards the vehicle rear side is therefore obstructed, and a load imparted to the impacting body 36 from the bumper cover 12 increases. However, when a load of a set value or above is input the contact side weakened portion 20E by the above contact of the contact portion 20D and the top end portion of the bumper reinforcement 32, the contact portion 20D folds up and slides past the bumper reinforcement 32 (the contact released state between the contact portion 20D and the bumper reinforcement 32, see the double-dashed intermittent lines in Fig. 2, and Fig. 5B) due to the contact side weakened portion 20E bending. The grille main body portion 20B is therefore allowed to rotate as far as the retreat position, reducing the load imparted to the impacting body 36 from the bumper cover 12. The first exemplary embodiment can accordingly reduce the maximum load acting on the impacting body 36.

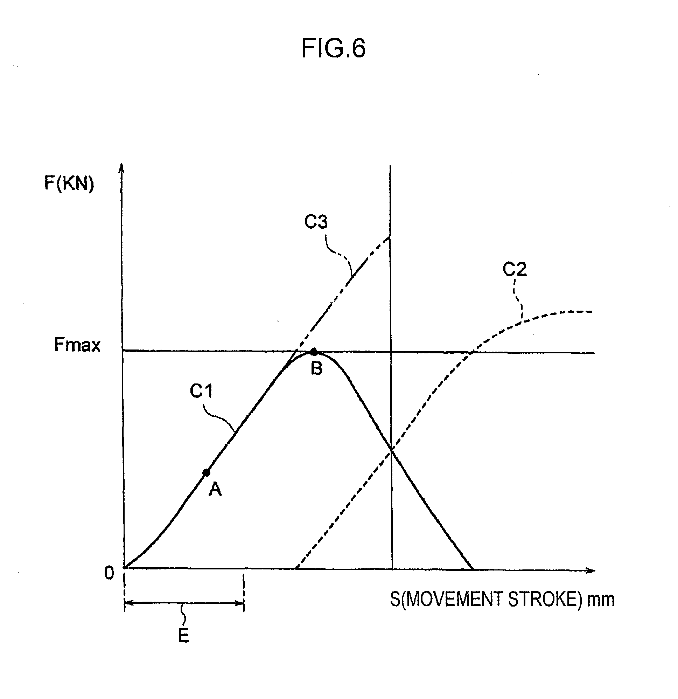

The F-S line graph shown in Fig. 6 illustrates by the curved line C1 the relationship between the load that the impacting body 36 receives from the bumper cover 12 and a displacement of the impacting body 36. Point A in Fig. 6 illustrates the relationship between the load acting on the impacting body 36 and a movement stroke when the contact portion 20D has made contact with the bumper reinforcement 32, and point B illustrates the relationship between the load acting on the impacting body 36 and the movement stroke when the contact side weakened portion 20E is bending. A range indicated by E in Fig. 6 shows an "initial period" of the rotation of the grille main body portion 20B.

As can be seen from Fig. 6, in the first exemplary embodiment, the load that the impacting body receives from the bumper cover 12 increases as far as a specific maximum load Fₘₐₓ, after which it immediately starts to decrease. The maximum load Fₘₐₓ can be set in advance, and is based on a load which is input to bend the contact side weakened portion 20E when contact is made between the contact portion 20D and the bumper reinforcement 32. The maximum load Fₘₐₓ acting on the impacting body 36 can accordingly be adjusted by appropriately changing setting of a bending rigidity of the contact side weakened portion 20E.

In the first exemplary embodiment, under normal circumstances the contact portion 20D of the radiator grille 20 is disposed facing the top end portion of the bumper reinforcement 32 and separated therefrom by a small gap. Therefore, the contact portion 20D comes into contact with the top end portion of the bumper reinforcement 32 immediately after rotational displacement starts when the contact portion 20D moves towards the vehicle rear side together with the grille main body portion 20B etc. as described above. Consequently, the load acting on the impacting body 36 in the initial period can be made to rapidly rise to the maximum load Fₘₐₓ and then start decreasing. Accordingly, even in cases where the impacting body 36 goes on to further collides with the hood 14, the increase in the load received by the impacting body 36 from the hood 14 (see the curved line C2 in Fig. 6) can be offset by the reduction in the load received by the impacting body 36 from the bumper cover 12 (see the curved line C1 in Fig. 6). Namely, the maximum load acting on the impacting body 36, which is calculated by adding the load from the hood 14 to the load from the bumper cover 12, both received by the impacting body 36, can avoid increasing as shown in the curved line C3 in Fig. 6. The maximum load Fₘₐₓ acting on the impacting body 36 can accordingly be suppressed to a specific set value or below. The first exemplary embodiment can therefore improve impacting body protection performance (in particular, the protection performance with respect to a thigh region of a pedestrian).

The configuration of the contact release section in the first exemplary embodiment can also be kept simple as the contact side weakened portion 20E provided to the radiator grille 20 is bent (deformed) thereby releasing the contact state between the contact portion 20D and the bumper reinforcement 32.

In the first exemplary embodiment, the weakened portion for rotation 20F provided to the radiator grille 20 is formed as a curved line following a curvature of the front side face of the radiator grille 20. The weakened portion for rotation 20F can alleviate any effects of difficulty in bending the radiator grille 20 which may be caused as the front face side of the radiator grille 20 is curved. The radiator grille 20 can accordingly be bent around the weakened portion for rotation 20F in a desirable fashion. A simple configuration can also be achieved for the planned bending portion since it is sufficient merely to provide a weakened portion (the weakened portion for rotation 20F) to the radiator grille 20.

Due to disposing the weakened portion for rotation 20F of the radiator grille facing the front end portions of the respective radiator support brackets 18 in the first exemplary embodiment, stress can be concentrated on the weakened portion for rotation 20F when load is input to the grille main body portion 20B of the radiator grille 20. The radiator grille 20 can accordingly be bent around the weakened portion for rotation 20F in a desirable fashion.

The contact portion 20D of the radiator grille 20 also comes into contact with the bumper reinforcement 32 provided at the lower side of the radiator grille 20. The contact portion 20D can therefore be caused to make contact with the bumper reinforcement 32 immediately after the grille main body portion 20B begins to be rotationally displaced. This is preferable as the initial load acting on the impacting body 36 is rapidly risen.

Deformation of the contact portion 20D by reaction force from the bumper reinforcement 32 can be suppressed in the first exemplary embodiment due to the contact portion 20D of the radiator grille 20 being reinforced by the ribs 28. Load can therefore be input effectively to the contact side weakened portion 20E, enabling the contact side weakened portion 20E to be folded up as intended.

Explanation follows regarding other exemplary embodiments of the present invention. Note that configurations and operations basically the same as the first exemplary embodiment are allocated the same reference numerals as in the first exemplary embodiment, and further explanation thereof is omitted.

### Second Exemplary Embodiment

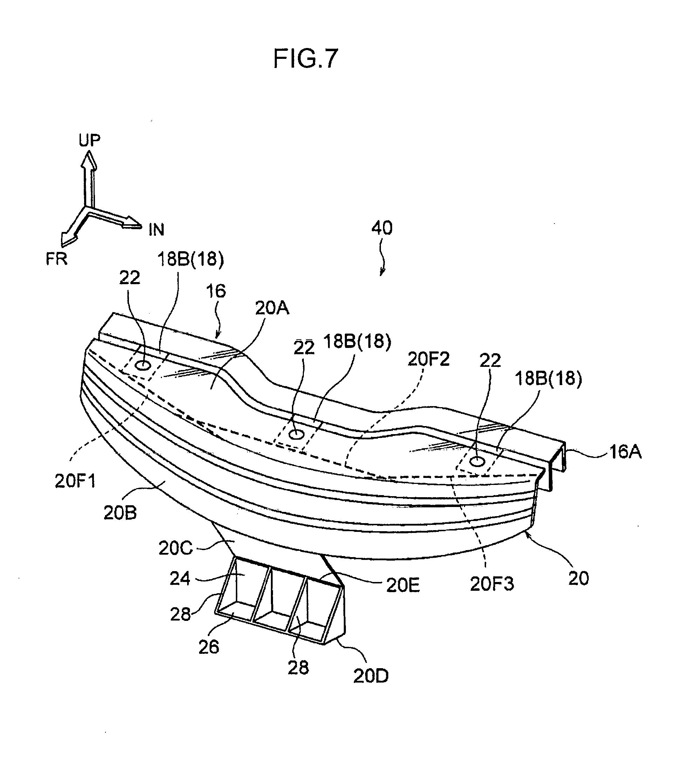

Fig. 7 shows a schematic perspective view of a radiator grille 40 that is a configuration member of a vehicle front section structure according to a second exemplary embodiment of the present invention.

A radiator grille 40 of the present second exemplary embodiment has the same basic configuration as the radiator grille 20 of the first exemplary embodiment. However, in place of the weakened portion for rotation 20F of the first exemplary embodiment, the radiator grille 40 is provided with plural (3 in this case) weakened portions for rotation 20F1, 20F2, 20F3 (all of which are planned bending portions) formed as straight lines in a row along the vehicle width direction. (Note that for ease of explanation, the weakened portions for rotation 20F1, 20F2, 20F3 are shown by bold dotted lines in Fig. 7). Similarly to the weakened portion for rotation 20F of the first exemplary embodiment, the weakened portions for rotation 20F1, 20F2, 20F3 are formed as plural (3 in this case) grooves along the vehicle width direction on a back face of a radiator grille 40 between a fixed portion 20A and a grille main body portion 20B. The grooves are formed by thinning a wall to weaken the radiator grille 40 between the fixed portion 20A and the grille main body portion 20B. The weakened portions for rotation 20F1, 20F2, 20F3 are disposed facing front end portions of the previously described radiator support brackets 18.

The weakened portion for rotation 20F2 disposed at a vehicle width direction central portion of the radiator grille 40 and is formed parallel to the vehicle width direction. The weakened portions for rotation 20F1, 20F3 disposed at the vehicle width direction end sides of the radiator grill 40 are slightly inclined with respect to the vehicle width direction, such that their respective outer side end portions in the vehicle width direction are disposed slightly further to a vehicle rear direction side than their inner side end portions. The weakened portions for rotation 20F, 20F2, 20F3 are accordingly disposed in a row along the vehicle width direction so as to follow a curvature of the front face side of the radiator grille 40.

When a load is input to the grille main body portion 20B of the radiator grille 40 from the vehicle front side, the grille main body portion 20B, the lower side extension portion 20C and the contact portion 20D are displaced to rotate together towards a retreat position (the position shown by the single-dashed intermittent lines in Fig. 2) at the vehicle rear side due to one or more of the weakened portions for rotation 20F1, 20F2, 20F3 bending.

Note that other parts of the configuration in the second exemplary embodiment than the above are similar to the first exemplary embodiment. The operation and advantageous effects of the second exemplary embodiment are accordingly basically the same as in the first exemplary embodiment.

In the second exemplary embodiment, since the weakened portions for rotation 20F1, 20F2, 20F3 of the radiator grille 40 are formed as straight lines and provided in a row along the vehicle width direction so as to follow the curvature of the front side of the radiator grille 40, the weakened portions for rotation 20F1, 20F2, 20F3 can reduce the effects of any difficulty in bending the radiator grille 20 caused by the front face side of the radiator grille 20 which has a curved shape. The radiator grille 40 can accordingly be bent around the weakened portions for rotation 20F1, 20F2, 20F3 in a desirable fashion.

By disposing the weakened portions for rotation 20F1, 20F2, 20F3 of the radiator grille facing the front ends of the respective radiator support brackets 18 in the second exemplary embodiment, stress can be concentrated on the weakened portions for rotation 20F1, 20F2, 20F3 when load is input to the grille main body portion 20B of the radiator grille 40. The radiator grille 40 can accordingly be bent around the weakened portions for rotation 20F1, 20F2, 20F3 in a desirable fashion.

### Third Exemplary Embodiment

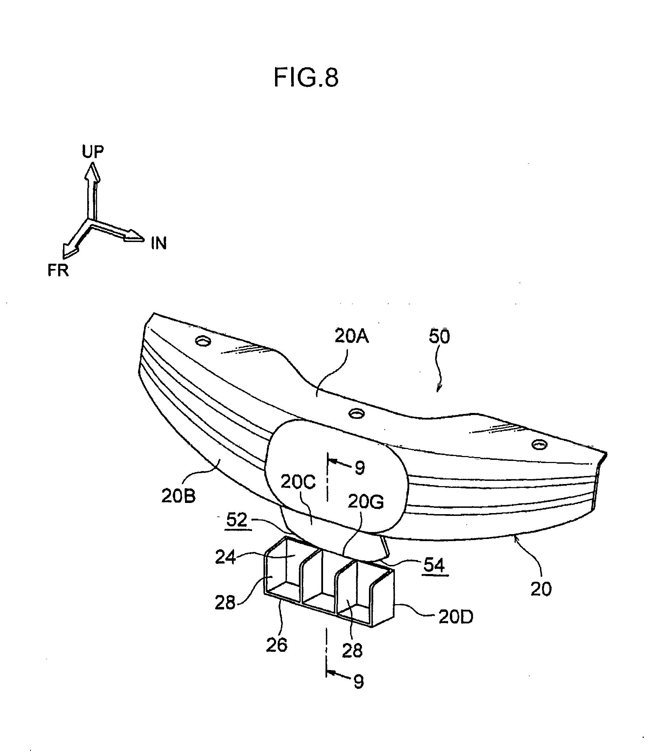

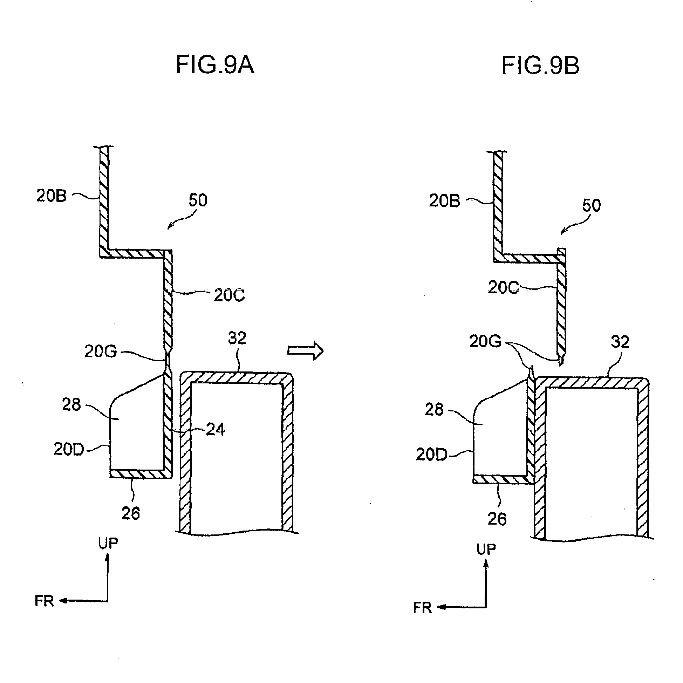

Fig. 8 shows a schematic perspective view of a radiator grille 50 that is a configuration member of a vehicle front section structure according to a third exemplary embodiment of the present invention. Fig. 9A shows a vertical cross-section taken along line 9-9 in Fig. 8.

A radiator grille 50 of the third exemplary embodiment has the same basic configuration as the radiator grille 20 of the first exemplary embodiment. However in the radiator grille 50 a vehicle width direction central portion of a grille main body portion 20B is formed with a plate shape (the lattice is omitted).

In the radiator grille 50, a lower side extension portion 20C also extends from a lower edge of the grille main body portion 20B towards the vehicle bottom side. A bottom edge of the lower side extension portion 20C is curved, as viewed along the vehicle front-rear direction, such that a vehicle width direction central portion thereof projects out further towards the vehicle bottom side than vehicle width direction end sides thereof. A vertical wall 24 of a contact portion 20D is integrally connected to the vehicle width direction central portion of the lower side extension portion 20C. Notches 52, 54 are consequently formed between the contact portion 20D and the lower side extension portion 20C.

As shown in Fig. 9A, the connection portion between the contact portion 20D and the lower side extension portion 20C is formed with a thin plate profile. A contact side weakened portion 20G is thereby provided between the lower side extension portion 20C and the contact portion 20D. The contact side weakened portion 20G is configured to rupture across from the notches 52, 54 when a load of a preset value or greater acts on the contact side weakened portion 20G.

In this exemplary embodiment, similarly to as in the first exemplary embodiment, the grille main body portion 20B is moved to rotate together with the lower side extension portion 20C and the contact portion 20D towards the vehicle rear side when load is input from the vehicle front side to the grille main body portion 20B of the radiator grille 50. The contact portion 20D accordingly contacts the top end portion of the bumper reinforcement 32. When a load of the preset value or greater is input by such contact to the contact side weakened portion 20G, the contact side weakened portion 20G ruptures and the contact portion 20D falls away, as shown in Fig. 9B. The above contact state is thereby released, allowing rotation of the grille main body portion 20B towards the retreat position. The operation and advantageous effects of the present exemplary embodiment are accordingly basically the same as those of the first exemplary embodiment.

Note that although the radiator grilles 20, 40, 50 according to each of the exemplary embodiments above are respectively configured with the weakened portion for rotation 20F and the weakened portions for rotation 20F1, 20F2, 20F3 disposed facing front end portions of the radiator support brackets 18, the invention is not limited thereto. It is sufficient to dispose the weakened portion(s) for rotation (planned bending portion(s)) anywhere between the fixed portion 20A and the grille main body portion 20B. For example, in cases where the fixed portion 20A extends much further towards the vehicle front direction than the front end portions of the radiator support brackets 18, configuration is such that the weakened portion(s) for rotation (planned bending portion(s)) is positioned between the leading end of the extending portion of the fixed portion 20A and the grille main body portion 20B.

Each of the above exemplary embodiments is respectively configured with the weakened portion for rotation 20F, or the weakened portions for rotation 20F1, 20F2, 20F3, as weakened portion(s) that serve as the planned bending portion, however the invention is not limited thereto. Any configuration may be made in which the planned bending section bends when a load of a preset value or greater is input from the vehicle front side to the grille main body portion 20B, thereby permitting the grille main body portion 20B to be moved to rotate towards the vehicle rear side.

Although the front face side of the radiator grilles 20, 40, 50 of each of the above exemplary embodiments are configured with a curve as viewed from the vehicle top-bottom direction, the invention is not limited thereto, and the shape of the radiator grille may be altered as appropriate.

Explanation has been given in each of the above exemplary embodiments of cases where the bumper reinforcement 32 serves as a vehicle body side member, however the invention is not limited thereto. Any member that is either part of the vehicle body or is attached to the vehicle body, and that has a sufficient degree of rigidity such that the contact side weakened portion 20E is caused to bend when the member makes contact with the contact portion 20D may be employed as the vehicle body side member.

The contact portion 20D is provided at a bottom edge portion of the radiator grille 20 in each of the above exemplary embodiments, however the invention is not limited thereto and where the contact portion is disposed may be varied as appropriate.

Explanation has been given in each of the exemplary embodiments above of cases where the contact side weakened portions 20E, 20G respectively provided to the radiator grilles 20, 40, 50 are employed to serve as a contact release section, however the invention is not limited thereto and appropriate changes can be made to the configuration of the contact release section. For example, in a case where the contact portion 20D is made to contact a vehicle body side member (such as a protrusion formed from a resin) attached for example to the bumper reinforcement 32 (vehicle body side), a weakened portion may be provided to the vehicle body side member to configure the contact release section.

In each of the above exemplary embodiments, the contact release section is configured by the contact side weakened portions 20E, 20G that bend (deform) or rupture, however the invention is not limited thereto. For example, in a case where the contact portion 20D is made to contact a vehicle body side member attached for example to the bumper reinforcement 32 (vehicle body side), configuration may be made such that the contact state between the contact portion 20D and the vehicle body side member is released by causing the vehicle body side member to move with respect to the vehicle body against for example a frictional force.

As well as the above, the present invention may be implemented with various other changes within a range not departing from the scope of the invention. Obviously the scope of rights of the present invention is not limited by each of the above exemplary embodiments.

## Claims

1. A vehicle front section structure (10) comprising:
a bumper cover (12) extending along a vehicle width direction at a vehicle front section;
a radiator grille (20) disposed at a vehicle rear side of the bumper cover (12) and comprising
a fixed portion (20A) provided at an upper side of the radiator grille (20), with the fixed portion (20A) fixed to an attachment member at a vehicle body side,
a grille main body portion (20B) provided below the fixed portion (20A) and supporting the bumper cover (12) from the vehicle rear direction side, **characterized by**
a planned bending portion (20E, 20F) that is provided between the grille main body portion (20B) and the fixed portion (20A), and is bent to allow the grille main body portion (20B) to rotate towards a retreat position at the vehicle rear side when a load is input to the grille main body portion (20B) from the vehicle front side, and
a contact portion (20D) that makes contact with a vehicle body side member (32) during rotation of the grille main body portion (20B); and
a contact release section (20E) that releases the contact state of the contact portion (20D) with the vehicle body side member (32) when an input load due to the contact is a set value or greater.

2. The vehicle front section structure (10) of claim 1, wherein the contact release section (20E) is a contact side weakened portion (20E) provided to the radiator grille (20), and the contact side weakened portion (20E) deforms or ruptures when the input load is the set value or greater.

3. The vehicle front section structure (10) of either claim 1 or claim 2, wherein the planned bending portion (20E, 20F) is formed with a curved line profile as viewed from the vehicle top-bottom direction such that a vehicle width direction central part of the planned bending portion (20E, 20F) is positioned further towards the vehicle front side than vehicle width direction end sides of the planned bending portion (20E, 20F).

4. The vehicle front section structure (10) of either claim 1 or claim 2, wherein the radiator grille (20) is formed with a curvature on the front face side, as viewed from the vehicle top-bottom direction, and the radiator grille (20) is provided with the planned bending portion (20E, 20F) formed as a single straight line provided along the vehicle width direction, or the radiator grille (20) is provided with a plurality of the planned bending portions (20E, 20F) formed as straight lines disposed in a row along the vehicle width direction so as to follow the curvature of the front face side of the radiator grille (20).

5. The vehicle front section structure (10) of any one of claim 1 to claim 4, wherein the vehicle body side member is disposed at a position so as to make contact with the contact portion (20D) at an initial period of the rotation.

6. The vehicle front section structure (10) of any one of claim 1 to claim 5, wherein the vehicle body side member is a bumper reinforcement, and the contact portion (20D) is provided at a bottom edge portion of the radiator grille (20).

7. The vehicle front section structure (10) of any one of claim 1 to claim 6, wherein the planned bending portion (20E, 20F) is a weakened portion for rotation where the radiator grille (20) is made weaker between the grille main body portion (20B) and the fixed portion (20A).

8. The vehicle front section structure (10) of claim 7, wherein the attachment member is formed with a higher rigidity than the radiator grille (20), and the weakened portion for rotation is disposed facing an end portion of the attachment member.

9. The vehicle front section structure (10) of any one of claim 1 to claim 8, wherein the vehicle body side member faces the contact portion (20D) and is separated from the contact portion (20D) by a gap.

## Patentansprüche

1. Fahrzeugfrontabschnittsstruktur (10) mit:
einer Stoßfängerabdeckung (12), die sich an einem Fahrzeugvorderseitenabschnitt entlang einer Fahrzeugbreitenrichtung erstreckt;
einem Kühlergrill (20), der in Fahrzeuglängsrichtung hinter der Stoßfängerabdeckung (12) angeordnet ist und Folgendes umfasst:
einen befestigten Abschnitt (20A), der an einer Oberseite des Kühlergrills (20) vorgesehen ist, wobei der befestigte Abschnitt (20A) an einem Anbringteil an einer Fahrzeugkarosserieseite befestigt ist,
einem Grillhauptkörperabschnitt (20B), der unter dem befestigten Abschnitt (20A) vorgesehen ist und die Stoßstangenabdeckung (21) in der Fahrzeuglängsrichtung von hinten stützt, **gekennzeichnet durch**
einen geplanten Biegeabschnitt (20E, 20F), der zwischen dem Grillhauptkörperabschnitt (20B) und dem befestigten Abschnitt (20A) vorgesehen ist und gebogen ist, um es dem Grillhauptkörperabschnitt (20B) zu erlauben, sich hin zu einer Rückzugsposition zur Fahrzeugrückseite zu drehen, wenn eine Last auf den Grillhauptkörperabschnitt (20B) von der Fahrzeugvorderseite einwirkt, und
einen Kontaktabschnitt (20D), der während der Drehung des Grillhauptkörperabschnitts (20B) in Kontakt mit einem Fahrzeugkarosserieseitenteil (32) kommt; und
einen Kontaktlöseabschnitt (20E), der den Kontaktzustand des Kontaktabschnitts (20D) mit dem Fahrzeugkarosserieseitenteil (32) löst, wenn eine einwirkende Last auf Grund des Kontakts gleich einem festgelegten Wert oder größer ist.

2. Fahrzeugfrontabschnittsstruktur (10) nach Anspruch 1, wobei der Kontaktlöseabschnitt (20E) ein auf der Kontaktseite geschwächter Abschnitt (20E) ist, der an dem Kühlergrill (20) vorgesehen ist, und der auf der Kontaktseite geschwächte Abschnitt (20E) sich verformt oder reißt, wen die einwirkende Last gleich dem festgelegten Wert oder größer ist.

3. Fahrzeugfrontabschnittsstruktur (10) nach Anspruch 1 oder 2, wobei der geplante Biegeabschnitt (20E, 20F) in der Richtung des Fahrzeugs von oben nach unten gesehen mit einem gekrümmten Linienprofil so geformt ist, dass ein in der Fahrzeugbreitenrichtung mittiger Teil des geplanten Biegeabschnitts (20E, 20F) weiter hin zur Vorderseite des Fahrzeug positioniert ist als die Endseiten des geplanten Biegeabschnitts (20E, 20F) in der Fahrzeugbreitenrichtung.

4. Fahrzeugfrontabschnittsstruktur (10) nach Anspruch 1 oder 2, wobei der Kühlergrill (20) mit einer Krümmung an der Vorderflächenseite in der Richtung des Fahrzeugs von oben nach unten gesehen gebildet ist, und der Kühlergrill (20) mit dem geplanten Biegeabschnitt (20E, 20F) versehen ist, der als eine einzelne gerade Linie geformt ist, die entlang der Fahrzeugbreitenrichtung verläuft, oder der Kühlergrill (20) mit einer Vielzahl der geplanten Biegeabschnitte (20E, 20F) versehen ist, die als gerade Linien geformt sind, die in einer Reihe entlang der Fahrzeugbreitenrichtung so angeordnet sind, dass sie der Krümmung der Vorderseitenfläche des Kühlergrills (20) folgen.

5. Fahrzeugvorderseitenabschnitt (10) nach einem der Ansprüche 1 bis 4, wobei das fahrzeugkarosserieseitige Teil an einer Position so angeordnet ist, dass es zu einem Anfangszeitabschnitt der Drehung mit dem Kontaktabschnitt (20D) in Kontakt kommt.

6. Fahrzeugvorderseitenabschnitt (10) nach einem der Ansprüche 1 bis 5, wobei das Fahrzeugkarosserieseitenteil eine Stoßfängerverstärkung ist, und der Kontaktabschnitt (20D) an einem Unterkantenabschnitt des Kühlergrills (20) vorgesehen ist.

7. Fahrzeugvorderseitenabschnitt (10) nach einem der Ansprüche 1 bis 6, wobei der geplante Biegeabschnitt (20E, 20F) ein geschwächter Abschnitt zum Drehen ist, an dem der Kühlergrill (20) zwischen dem Grillhauptkörperabschnitt (20B) und dem befestigten Abschnitt (20A) geschwächt wurde.

8. Fahrzeugfrontabschnittsstruktur (10) nach Anspruch 7, wobei das Anbringteil mit einer höheren Festigkeit als der Kühlergrill (20) gebildet ist, und der geschwächte Abschnitt zum Drehen so angeordnet ist, dass er einem Endabschnitt des Anbringteils gegenüberliegt.

9. Fahrzeugfrontabschnittsstruktur (10) nach einem der Ansprüche 1 bis 8, wobei das Fahrzeugkarosserieseitenteil dem Kontaktabschnitt (20D) gegenüberliegt und von dem Kontaktabschnitt (20D) durch einen Spalt getrennt ist.

## Revendications

1. Structure (10) de section avant de véhicule comprenant :
un couvercle de pare-chocs (12) s'étendant dans la direction de la largeur de véhicule au niveau d'une section avant de véhicule ;
une grille (20) de radiateur disposée du côté arrière de véhicule par rapport au couvercle de pare-chocs (12) et comprenant :
une partie fixe (20A) disposée du côté supérieur de la grille (20) de radiateur, la partie fixe (20A) étant fixée à un élément de fixation au niveau d'un côté de carrosserie de véhicule ;
une partie (20B) formant corps principal de grille disposée sous la partie fixe (20A) et supportant le couvercle de pare-chocs (12) à partir du côté dans la direction arrière de véhicule,
**caractérisée par** :
une partie pliante plane (20E, 20F) qui est disposée entre la partie (20B) formant corps principal de grille et la partie fixe (20A), et qui se plie pour permettre à la partie (20B) formant corps principal de grille de tourner en direction d'une position en retrait du côté arrière de véhicule lorsqu'un effort est appliqué à la partie (20B) formant corps principal de grille depuis le côté avant de véhicule ; et
une partie (20D) de contact qui fait contact avec un élément latéral (32) de carrosserie de véhicule durant la rotation de la partie (20B) formant corps principal de grille ; et
une section (20E) de libération de contact qui libère l'état de contact de la partie (20D) de contact avec l'élément latéral (32) de carrosserie de véhicule lorsqu'un effort entré en raison du contact est au moins égal à une valeur fixée.

2. Structure (10) de section avant de véhicule selon la revendication 1, dans laquelle la section (20E) de libération de contact est une partie affaiblie du côté contact (20E) prévue sur la grille (20) de radiateur, et dans laquelle la partie affaiblie du côté contact (20E) se déforme ou se rompt lorsque l'effort entré est au moins égal à la valeur fixée.

3. Structure (10) de section avant de véhicule selon soit la revendication 1 soit la revendication 2, dans laquelle la partie pliante plane (20E, 20F) est formée avec un profil curviligne vu depuis la direction haut-bas de sorte qu'une pièce centrale dans la direction de la largeur de véhicule de la partie pliante plane (20E, 20F) est placée davantage vers le côté avant de véhicule que les côtés d'extrémité dans la direction de la largeur de véhicule de la partie pliante plane (20E, 20F).

4. Structure (10) de section avant de véhicule selon soit la revendication 1 soit la revendication 2, dans laquelle la grille (20) de radiateur est formée avec une courbure du côté de la face avant, vue depuis la direction haut-bas de véhicule, et la grille (20) de radiateur est pourvue d'une partie pliante plane (20E, 20F) formée comme une unique ligne droite disposée suivant la direction de la largeur de véhicule, ou bien la grille (20) de radiateur est pourvue d'une pluralité de parties pliantes planes (20E, 20F) formées comme des lignes droites disposées en une rangée suivant la direction de la largeur de véhicule de façon à suivre la courbure du côté de face avant de la grille (20) de radiateur.

5. Structure (10) de section avant de véhicule selon l'une quelconque de la revendication 1 à la revendication 4, dans laquelle l'élément latéral de carrosserie de véhicule est disposé à une position propre à faire contact avec la partie (20D) de contact au moment d'une période initiale de la rotation.

6. Structure (10) de section avant de véhicule selon l'une quelconque de la revendication 1 à la revendication 5, dans laquelle l'élément latéral de carrosserie de véhicule est un renfort de pare-chocs, et la partie (20D) de contact est disposée à la partie de bord inférieur de la grille (20) de radiateur.

7. Structure (10) de section avant de véhicule selon l'une quelconque de la revendication 1 à la revendication 6, dans laquelle la partie pliante plane (20E, 20F) est une partie affaiblie pour rotation là où la grille (20) de radiateur est réalisée plus faible entre la partie (20B) formant corps principal de grille et la partie fixe (20A).

8. Structure (10) de section avant de véhicule selon la revendication 7, dans laquelle l'élément de fixation est réalisé avec une rigidité plus grande que la grille (20) de radiateur, et dans laquelle la partie affaiblie pour rotation est disposée en face d'une partie d'extrémité de l'élément de fixation.

9. Structure (10) de section avant de véhicule selon l'une quelconque de la revendication 1 à la revendication 8, dans laquelle l'élément latéral de carrosserie de véhicule fait face à la partie (20D) de contact et est séparé de la partie (20D) de contact par un espace.
